# EUROPÄISCHE PATENTSCHRIFT

(11) **EP 1 344 424 B1**
(45) Veröffentlichungstag und Bekanntmachung des Hinweises auf die Patenterteilung: **09.05.2012**
(21) Anmeldenummer: 01271778.1
(22) Anmeldetag: 12.11.2001
(51) Int. Cl.: H04M 7/00

(54) **VORRICHTUNG ZUM PAKETBASIERTEN ANSCHLUSS VON KLASSISCHEN ISDN/PSTN-TEILNEHMERN AN EIN VERMITTLUNGSSYSTEM**
DEVICE FOR THE PACKET-BASED ACCESS OF CLASSICAL ISDN/PSTN SUBSCRIBERS TO A SWITCHING SYSTEM
DISPOSITIF PERMETTANT DE CONNECTER EN MODE PAQUETS DES ABONNES A DES RESEAUX ISDN/PSTN CLASSIQUES A UN SYSTEME DE COMMUTATION

(30) Priorität: 18.12.2000 DE 10063082
(43) Veröffentlichungstag der Anmeldung: 17.09.2003
(73) Patentinhaber: Nokia Siemens Networks GmbH & Co. KG, 81541 München (DE)
(72) Erfinder: LÖBIG, Norbert, 64291 Darmstadt (DE)
(86) Internationale Anmeldenummer: PCT/DE2001/004239
(87) Internationale Veröffentlichungsnummer: WO 2002/051196

(56) Entgegenhaltungen:
- EP-A- 0 966 145
- KORPI M ET AL: "SUPPLEMENTARY SERVICES IN THE H.323 IP TELEPHONY NETWORK" IEEE COMMUNICATIONS MAGAZINE, Bd. 37, Nr. 7, Juli 1999 (1999-07), Seiten 118-125, XP000835313 ISSN: 0163-6804
- HUITEMA C ET AL: "AN ARCHITECTURE FOR RESIDENTIAL INTERNET TELEPHONY SERVICE" IEEE NETWORK, Bd. 13, Nr. 3, Mai 1999 (1999-05) - Juni 1999 (1999-06), Seiten 50-56, XP000870631 ISSN: 0890-8044
- ARAZI D: "VOICE OVER DSL" FUNKSCHAU, Bd. 72, Nr. 24, 12. November 1999 (1999-11-12), Seiten 64-66, XP000940343 ISSN: 0016-2841
- LAKSHMI-RATAN R A: "THE LUCENT TECHNOLOGIES SOFTSWITCH - REALIZING THE PROMISE OF CONVERGENCE" BELL LABS TECHNICAL JOURNAL, Bd. 4, Nr. 2, April 1999 (1999-04) - Juni 1999 (1999-06), Seiten 174-195, XP000851517 ISSN: 1089-7089

## Beschreibung

Die Erfindung betrifft eine Vorrichtung gemäß den Merkmalen von Patentanspruch 1.

Aus der europäischen Patentanmeldung EP-A 0 966 145 ist ein ein Gateway zwischen dem switched circuit network (SCN) und einem IP Netz bekannt, welches calls bearbeiten kann zwischen Teilnehmern am SCN, also klassischen Teilnehmern, und Clients am IP Netz und hierbei den IP Clients ähnliche supplementary call services/features anbietet, wie sie von Terminals an einer Nebenstellenanlage PBX bekannt sind.

Zum Anschluss von klassischen analogen und ISDN Teilnehmern sowie Nebenstellenanlagen kommen Teilnehmeranschlußkonzentratoren (Remote Switching Units, RSU) oder Teilnehmeranschlussnetze (Access Networks, AN) zum Einsatz. Beide stellen vermittlungsstellenexterne Einrichtungen dar, die über konzentrierende Schnittstellen an die peripheren Einrichtungen der Vermittlungsstelle angebunden sind.

Die Teilnehmeranschlußkonzentratoren /Teilnehmeranschlußnetze haben gemäß ihrer jeweiligen Definition ausgeprägte Mechanismen zur Heranführung der Teilnehmersignalisierung an die peripheren Einrichtungen des Vermittlungssystems. Zugleich sind Signalisierungsmöglichkeiten zur Steuerung des Teilnehmeranschlusskonzentrators /Teilnehmeranschlussnetzes selbst vorgesehen. Diese betreffen zum Beispiel die Durchschaltung von Sprachkanälen des Teilnehmeranschlusses bzw. der Nebenstelle auf Sprachkanäle der Schnittstelle des Teilnehmeranschlusskonzentrators /Teilnehmeranschlussnetzes zu den peripheren Einrichtungen des Vermittlungsknotens. Auch der Betriebszustand von Teilnehmeranschluss und Nebenstelle wird auf diesem Wege zwischen Teilnehmeranschlusskonzentrator /Teilnehmeranschlussnetz und dem Vermittlungssystem abgeglichen.

Der Austausch der Teilnehmersignalisierung und Steuerungsinformation erfolgt in der Regel nachrichtenbasiert in der durch die Schnittstellendefinition vorgegebenen Weise. Typischerweise ist die gesamte Schnittstelle PCM-basiert, und es werden gewisse Zeitschlitze reserviert für die nachrichtenbasierte Übertragung von Teilnehmer- /Nebenstellensignalisierung und Steuerungsinformation.

Als Beispiel einer konzentrierenden Schnittstelle zwischen einem Teilnehmeranschlussnetz und einer Ortsvermittlungsstelle sei die V5.2-Schnittstelle genannt. Diese sieht vor, dass ISDN-Signalisierung, ISDN-Paketdaten auf dem D-Kanal, nachrichtenbasierte analoge Signalisierung (PSTN) in gemäß Standardvorgaben definierbaren Zeitschlitzen der Schnittstelle übertragen werden. Zur Steuerung des Teilnehmeranschlussnetzes sind Signalisierungsprotokolle vorgesehen, die die Durchschaltung von Informationen durch das Teilnehmeranschlussnetz, den Abgleich von Port und PCM-Streckenzuständen sowie die Ersatzschaltung von ausgefallenen Signalisierungskanälen betreffen.

Proprietäre nachrichtenbasierte konzentrierende Schnittstellen können sich hinsichtlich der Definition zwar wesentlich von den Vorgaben des V5.2-Standards unterscheiden. Allen nachrichtenbasierten Schnittstellen zu Teilnehmeranschlusskonzentratoren /Teilnehmeranschlussnetzen ist jedoch gemeinsam, dass sie Teilnehmersignalisierungsinformationen (ISDN Signalisierungsnachrichten, ISDN-Paketdaten, PSTN-Nachrichten) sowie Steuerungsinformationen zur Durchschaltung oder zum Portzustandsabgleich in gewissen Zeitschlitzen einer TDM-basierten Schnittstelle übertragen.

Mit der Konvergenz von paketbasierten Netzen und TDM-Netzen stellt sich das Problem der Bedienung von klassischen analogen und ISDN-Teilnehmern sowie Nebenstellenanlagen über paketbasierte Übertragungsverfahren.

Über xDSL-Strecken zum Teilnehmeranschluss oder über Kabelnetze kann ein hocheffizienter Zugriff auf das Internet erfolgen. Damit steht im Teilnehmerbereich genügend Bandbreite zur Verfügung, um schmalbandigen klassischen Telephonie-/ Faxverkehr additiv über die gleiche Zugangsleitung abwickeln zu können. Aus Sicht des Teilnehmers soll damit additive Anschließbarkeit konventioneller Teilnehmerendgeräte und Nebenstellenanlagen möglich sein. Zusätzlich sollten hierbei alle aus den klassischen PSTN/ ISDN-Netzen bekannte Teilnehmerleistungsmerkmale verfügbar bleiben. Die für den Vermittlungsverkehr notwendigen Nutzdaten werden jedoch im Unterschied zu der Situation eines Teilnehmeranschlusskonzentrators /Teilnehmeranschlussnetzes paketbasiert übertragen. Gleiches gilt für die Signalisierung.

In dieser Situation ergibt sich die Problematik, klassische Teilnehmer oder Nebenstellen (also POTS, ISDN BA, ISDN PRI), die über Teilnehmerabschlussvorrichtungen (z. B. IAD einer xDSL-Strecke, Set-Top-Box eines Kabelnetzes) mit Zugriff zu einem Paketnetz vermittlungstechnisch bedient werden, derart anzuschließen, dass alle klassischen Teilnehmerleistungsmerkmale (inklusive D-Kanal-Paketdaten) prinzipiell verfügbar sind. Weiterhin sollte die Wiederverwendbarkeit der HW- und SW-Funktionen einer klassischen Vermittlungsstelle gegeben sein, Nutzdatenströme sollten vorzugsweise paketbasiert geführt werden oder optional via TDM-Technik in die Vermittlungsstelle hereingeführt werden können sowie Signalisierungsinformationen und ISDN-D-Kanal-Paketdaten paketbasiert zur Vermittlungsstelle übertragen werden können.

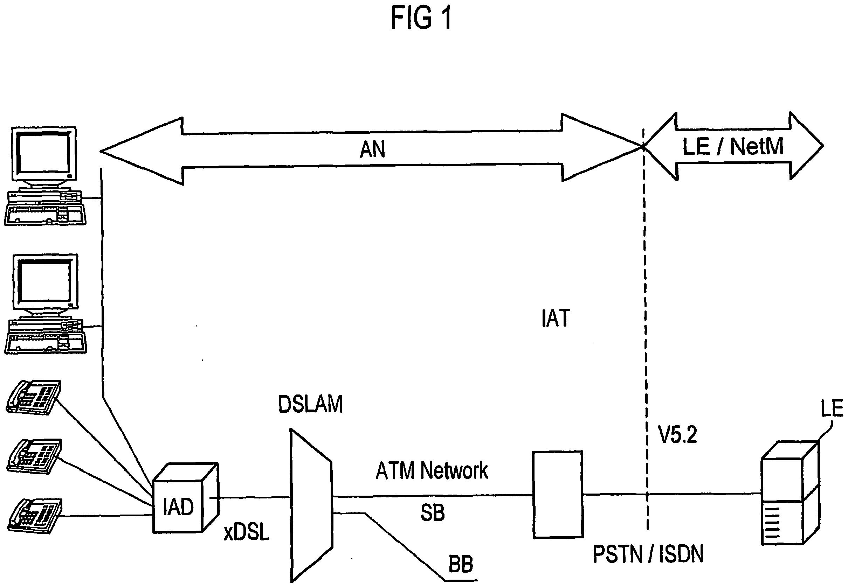

Beim Stand der Technik werden zur Lösung dieser Problematik die genannten klassischen Teilnehmer als Teil eines Teilnehmeranschlussnetzes geführt. Dieses weist zentrale Komponenten (z.B. IAT) auf, die die Umsetzung des schmalbandigen Nutzdatenstroms in TDM-Technik vornehmen und Signalisierung und Nutzdatenströme in Form einer V5.2-Schnittstelle bereitstellen. Die Nutzdatenströme werden dann in einer konventionellen Ortsvermittlungsstelle des PSTN /ISDN-Netzes bearbeitet. Breitbandiger Verkehr wird durch geeignete vorgelagerte Multiplexeinrichtungen ab- und zugeführt. Die entsprechenden Verhältnisse sind in Fig. 1 schematisch aufgezeigt. Demgemäss ist ein Teilnehmerzugangsnetz AN aufgezeigt, das Informationen einer Mehrzahl von Teilnehmerendgeräten den peripheren Einrichtungen einer Vermittlungsstelle LE zuführt. Als Teilnehmerabschlussvorrichtung ist eine Vorrichtung IAD vorgesehen, die spezifische Funktionen von xDSL-Übertragungsverfahren unterstützt. In einem Multiplexer DSLAM werden schmalbandige von breitbandigen Informationen getrennt sowie die xDSL Strecke abgeschlossen. Die Sprach- und Signalisierungsinformationen werden IP basiert über ein ATM-Netz als Träger einer Einrichtung IAT zugeführt, die die Kopfstelle des Teilnehmerzugangsnetzes AN bildet. Letztere leitet die Sprach- und Signalisierungsinformationen über eine V5.2 Schnittstelle einer Ortsvermittlungsstelle LE zu.

Die Vorteile des dort aufgezeigten Konzeptes liegen zum einen in der Nutzung einer bestehenden konzentrierenden Schnittstelle und zum anderen in der Verfügbarkeit aller durch die Vermittlungsstelle unterstützten Teilnehmerleistungsmerkmale. Der entscheidende Nachteil hingegen liegt in der Nutzung von TDM-Technik in einer im Umfeld konvergenter Netze tätigen Vermittlungsstelle. Hinzu kommt eine Verschlechterung der Sprachqualität durch die gegebenenfalls vermeidbare Umsetzung des Nutzdatenstroms zwischen TDM- Technik mit Codec G.711 und der paketbasierten Übertragung mittels einem i.a. komprimierenden Codec wie z.B. G.723.1.

Der Erfindung liegt die Aufgabe zugrunde, einen Weg aufzuzeigen, wie klassische Teilnehmer mit einfachen Mitteln über paketbasierte Übertragungsverfahren an eine Vermittlungsstelle angebunden werden können.

Die Erfindung wird ausgehend von den im Oberbegriff von Patentanspruch 1 angegebenen Merkmale durch die Merkmale des kennzeichnenden Teils gelöst.

Vorteilhaft an der Erfindung ist insbesondere, dass die beim Stand der Technik außerhalb der vermittlungsstellen angeordneten Einrichtungen eines Teilnehmeranschlussnetzes, welche zentrale Funktionen wie Adressumsetzung, Nachrichtenrouting für Signalisierungsnachrichten und TDM-Schnittstelle zur Ortsvermittlungsstelle LE bereitstellen, in die Peripherie der Vermittlungsstelle integriert werden. Damit wird die Funktionalität der teilnehmeranschlussnetzseitigen konzentrierenden Schnittstelle in die Peripherie des Vermittlungssystems integriert. Zugleich bleibt für die internen Einrichtungen (Kernel) der Vermittlungsstelle die Sichtweise und die Bedienung eines Teilnehmeranschlussnetzes erhalten. Hiermit kann die auf nachrichtenbasierter Signalisierung definierte konzentrierende Teilnehmerschnittstelle einer Ortsvermittlungsstelle hinsichtlich SW und HW-Funktionen für die vermittlungstechnische Bearbeitung von klassischen Teilnehmern an der Teilnehmerabschlussvorrichtung weiterverwendet werden.

Als weiterer Vorteil ist die vermittlungstechnische Behandlung der Teilnehmersignalisierung, die Weiterleitung der D-Kanal-Paketdaten mit den existierenden Mitteln der konzentrierenden Teilnehmerschnittstelle zu sehen. Hierzu sind erfindungsgemäß Adressierung, Nachrichtenformate und Protokolle in der der peripheren Einrichtung vorgelagerten peripheren Adaptionseinrichtung anzupassen. Dies erfolgt, indem die Signalisierung einer Mehrzahl von Teilnehmern an der Teilnehmerabschlussvorrichtung zu einer Teilnehmergesamtheit zusammengefasst wird und eine Zuordnung zu einem logischen Signalisierungskanal oder einem Signalisierungspfad entsprechend der Definition der konzentrierenden Schnittstelle vorgenommen wird.

Ferner wird insbesondere die Teilnehmersignalisierung an die periphere Einrichtung dem Falle des Anschlusses einer TDM-basierten konzentrierenden Schnittstelle entsprechend herangeführt. Ferner werden vorgelagerte Ausfälle, d. h. Ausfälle der peripheren Adaptionseinrichtung auf Signalisierungskanalausfälle der Schnittstelle mit gegebenenfalls möglicher Ersätzschaltung abgebildet. Sofern es erforderlich ist, sind teilnehmernahe Konfigurationsdaten und Topolgieinformationen nur in der peripheren Adaptionseinrichtung über ein eigenes Management Interface zu hinterlegen.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die Verhältnisse im Teilnehmerzugangsnetz gemäß dem Stand der Technik,
- Fig 2: eine konzentrierende Schnittstelle mit zwangsweiser Nutzdatenwandlung,
- Fig 3: eine konzentrierende Schnittstelle ohne zwangsweise Nutzdatenwandlung,

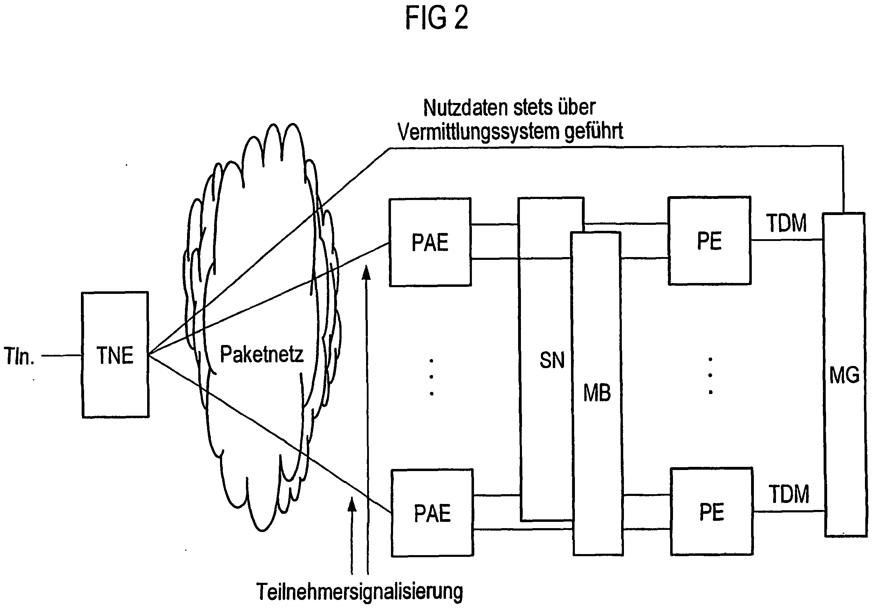

Fig. 2 zeigt eine Teilnehmerabschlußvorrichtung TNE mit den klassischen Teilnehmerschnittstellen (a/b Ader, S0, S2M). Diese terminiert die physikalischen Anschlussleitungen von POTS, ISDN BA und ISDN PRI. Die Teilnehmerabschlussvorrichtung TNE ist im wesentlichen identisch mit derjenigen des Standes der Technik gemäß Fig. 1. Sie hat Zugriff auf mindestens 2 periphere Adaptionseinrichtungen PAE der Vermittlungsstelle, wobei dieser Zugriff paketbasiert erfolgt.

Die hier weiterhin aufgezeigten peripheren Adaptionseinrichtungen PAE sind peripherer Bestandteil der Vermittlungsstelle. Sie haben Zugriff auf das Nachrichtenverteilsystem MB der Vermittlungsstelle. Zusätzlich kann Zugriff auf das Koppelfeld SN bestehen, wobei alternativ PCM-basierte Schnittstellen an der peripheren Adaptionseinrichtung PAE vorhanden sein können.

Letztlich sind periphere Einrichtungen PE der Vermittlungsstelle mit Zugriff zu Nachrichtenverteilsystem MB und Koppelnetz SN vorgesehen. Eine Mehrzahl der einer konzentrierenden Schnittstelle zugeordneten peripheren Einrichtungen PE stellt die vermittlungstechnische Funktion für diese konzentrierende Schnittstelle bereit. Zu diesem Zwecke terminiert eine periphere Einrichtung PE in herkömmlicher Anwendung eine Mehrzahl von PCM-Strecken dieser konzentrierenden Schnittstelle. Werden ISDN Paketdaten auf dem D-Kanal unterstützt, so wird von der genannten Mehrzahl der der konzentrierenden Schnittstelle zugeordneten peripheren Einrichtungen PE ebenso die Transferfunktion für D-Kanal-Paketdaten zum Packet Handler Interface bereitgestellt.

Mit dem Einschalten einer Teilnehmerabschlussvorrichtung TNE versucht diese, in Kommunikation mit einem der ihr zugeordneten peripheren Adaptionseinrichtungen PAE zu treten. Die Paketadressen der zugeordneten peripheren Adaptionseinrichtungen PAE können hierbei lokal in der Teilnehmerabschlussvorrichtung TNE hinterlegt sein. Wahlweise können sie mit dem Hochlauf bei dem für das Netz zuständigen Management System abgefragt werden. Misslingt die Kommunikation mit der in Frage kommenden peripheren Adaptionseinrichtung PAE, so erfolgt ein erneuter Kommunikationsversuch mit einer weiteren zugeordneten peripheren Adaptionseinrichtung PAE. Im Misserfolgsfalle wird der Kommunikationsversuch mit einer der peripheren Adaptionseinrichtung PAE zyklisch wiederholt.

Ist die Kommunikation zu einer peripheren Adaptionseinrichtung PAE hergestellt, so erfolgt die Teilnehmersignalisierung transparent für ISDN Teilnehmer und Nebenstellen. Dies bedeutet, dass die über den D-Kanal eintreffenden Nachrichten paketbasiert in Richtung der peripheren Adaptionseinrichtung PAE gesendet werden. An die peripheren Adaptionseinrichtung PAE gesendete Nachrichten enthalten die Paketadresse der Teilnehmerabschlussvorrichtung TNE ergänzt um die Kennung des betroffenen Ports bzw. eine Paketadresse, aus der der absendende D-Kanal eindeutig hervorgeht. Von der peripheren Adaptionseinrichtung PAE an die Teilnehmerabschlussvorrichtung TNE gesendete Nachrichten enthalten die Paketadresse der teilnehmernahen Einrichtung TNE ergänzt um die Kennung des betroffenen Ports bzw. eine Paketadresse, aus der der empfangende D-Kanal eindeutig hervorgeht.

Signalisierungsnachrichten und Paketdaten auf dem D-Kanal werden in gleicher Weise übertragen. Die Übertragung des ISDN L2 kann ungesichert erfolgen, was insbesondere in guten Paketnetzen vollkommen ausreichend ist. Zur Verbesserung der Übertragungsgüte (Nachrichtenreihenfolge, Delays) wird der ISDN L2 in der Teilnehmerabschlussvorrichtung TNE vorzugsweise abgeschlossen und ein gesichertes Protokoll zwischen dieser und der peripheren Adaptionseinrichtung PAE verwendet.

Für Teilnehmeranschlüsse mit analoger Signalisierung werden die Leitungssignale in der Teilnehmerabschlussvorrichtung TNE auf vermittlungstechnische Nachrichten umgesetzt bzw. in der Gegenrichtung vermittlungstechnische Nachrichten in Leitungssignale umgesetzt. Diese werden in gleicher Weise zwischen der Teilnehmerabschlussvorrichtung TNE und der peripheren Adaptionseinrichtung PAE ausgetauscht, wie es für Signalisierungsnachrichten der ISDN-Teilnehmer an der Teilnehmerabschlussvorrichtung TNE der Fall ist. Im Bedarfsfall kann ein vom ISDN-Fall abweichendes Protokoll verwendet werden. Die Adressierung des analogen Ports erfolgt über eine Paketadresse pro analogem Port oder über eine um eine Portkennung ergänzte Paketadresse für eine Mehrzahl von analogen Ports an der teilnehmernahen Einrichtung TNE.

Die Durchschalteaufträge eines Kanals für ein Port an der Teilnehmerabschlussvorrichtung TNE sowie gegebenenfalls Verfügbarkeitszustand des Ports werden zwischen Teilnehmerabschlussvorrichtung TNE und peripheren Adaptionseinrichtung PAE ausgetauscht. Hierzu wird ein paketbasiertes Protokoll verwendet, das die genannten Funktionen abdeckt.

Ist die konzentrierende Schnittstelle der Vermittlungsstelle derart ausgebildet, dass ein Port über mehrere Kommunikationskanäle zugleich Zugriff zum Vermittlungssystem hat, (was z. B. Load-sharing Betriebsweise der Fall ist), so werden Kommunikationsbeziehungen zwischen Teilnehmerabschlussvorrichtung TNE und mehreren peripheren Adaptionseinrichtung PAE aufgebaut und gleichzeitig im voranstehenden Sinne genutzt.

Zur Vereinfachung der Beschreibung wird im folgenden nur der Fall der Zuordnung eines Ports zu jeweils maximal einem Kommunikationskanal für ISDN-Signalisierung, ISDN-D-Kanal-Paketdaten und/oder PSTN-Signalisierung betrachtet, die alle über die gleiche peripheren Adaptionseinrichtung PAE geführt sind. Wird eine über eine peripheren Adaptionseinrichtung PAE laufende Kommunikationsbeziehung abgebrochen, versucht die Teilnehmerabschlussvorrichtung TNE zyklisch den Aufbau einer erneuten Kommunikationsbeziehung mit einer weiteren peripheren Adaptionseinrichtung PAE. Hierzu stoppt sie die den aktiven Ports zugeordneten paketbasierten Nutzdatenströme.

Die Funktionen der peripheren Adaptionseinrichtung PAE dienen der Anpassung der auf der Schnittstelle zwischen Teilnehmerabschlussvorrichtung TNE und peripheren Adaptionseinrichtung PAE verwendeten Nachrichten an die Bedürfnisse der dem TNE-Port zugeordneten konzentrierenden Schnittstelle:
Es erfolgt also insbesondere die Adressumsetzung zwischen der für das TNE-Port verwendeten Adressierung und der vermittlungsstelleninternen Adresse des Ports auf der für das Port zuständigen konzentrierenden Schnittstelle. Ferner wird die Protokollkonvertierung der Teilnehmersignalisierung der in Richtung Teilnehmerabschlussvorrichtung TNE verwendeten Nachrichten auf das den jeweiligen Signalisierungskanälen der konzentrierenden Schnittstelle verwendete Protokoll vorgenommen.

Hiermit wird die Weiterschaltung der ISDN-Signalisierungsdaten zwischen peripheren Adaptionseinrichtungen PAE und den peripheren Einrichtungen PE ermöglicht. Diese erfolgt TDM-basiert über das Koppelnetz auf die peripheren Einrichtungen PE, welche die jeweiligen Signalisierungskanäle terminieren. Hierzu kommen im Systemhochlauf etablierte systeminterne NUC-Verbindungen (Nailed up Connections) zum Einsatz. Die Verteilung der Signalisierungsnachrichten der Teilnehmerabschlussvorrichtung TNE auf eine Mehrzahl von derartigen festen NUC-Verbindungen erfolgt mittels der zugehörigen konzentrierenden Schnittstelle, der Portadresse und dem Nachrichtentyp. Unterstützt das Nachrichtenverteilsystem einen hinreichend performanten Nachrichtentransfer zwischen peripherer Einrichtung PE und peripherer Adaptionseinrichtung PAE, so kann die Nachrichtenübertragung per NUC und Koppelnetz auch entfallen und alternativ das Nachrichtenverteilsystem zur Übertragung der Signalisierungsnachrichten zwischen peripherer Einrichtung und peripherer Adaptionseinrichtung benutzt werden.

Damit schafft die peripheren Adaptionseinrichtung PAE die Voraussetzung dafür, dass in den zu der konzentrierenden Schnittstelle des Vermittlungssytems gehörigen peripheren Einrichtung PE die Signalisierung der Teilnehmer zu der Teilnehmerabschlussvorrichtung TNE in gleicher Weise eintrifft, als wäre sie über ein dazwischenliegendes Teilnehmerzugangsnetz AN über TDM-Technik herangeführt worden. Signalisierungsdaten werden in der der konzentrierenden Schnittstelle üblichen Weise verarbeitet. D-Kanal-Paketdaten werden zum Packet Handler Interface weitergeschaltet.

Die für die Steuerung der konzentrierenden Schnittstelle notwendige Signalisierung zur Bewirkung von Durchschaltungen und zum Abgleich des Portzustands erfolgt ebenfalls über eine periphere Adaptionseinrichtung PAE, wobei diese ebenfalls über NUC oder über das Nachrichtenverteilsystem geführt werden. Mit dem voranstehend genannten Verfahren werden 2 Typen von konzentrierenden Schnittstellen ermöglicht.

Die erste ist wie in Fig. 2 aufgezeigt, dadurch gekennzeichnet, dass sie die Nutzdatenkanäle der Ports an der Teilnehmerabschlussvorrichtung TNE stets über ein Media Gateway MG in eine der vermittlungstechnisch dem Call zugeordnete periphere Einrichtung PE hineinführt. Mit dieser Anschlussart werden insbesondere alle Teilnehmerleistungsmerkmale für das Port bereitgestellt(Konzentrierende Schnittstelle mit zwangsweiser Nutzdatenwandlung).

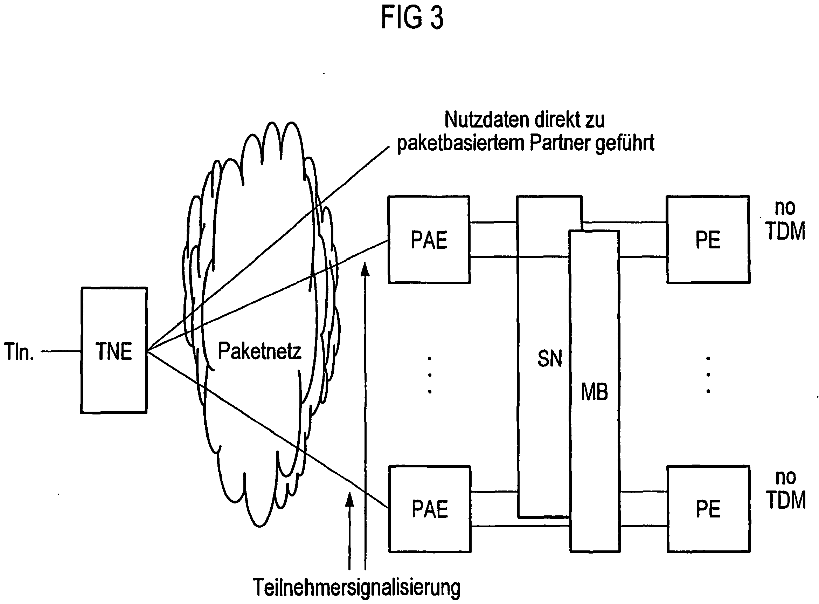

Der zweite Typ der konzentrierenden Schnittstelle verzichtet wie in Fig. 3 dargestellt, auf die unbedingte Wandlung des Nutzkanals auf TDM-Format und ermöglicht so den direkten Austausch der Nutzdaten zwischen 2 Teilnehmern an der Teilnehmerabschlussvorrichtung TNE unter Umgehung der Vermittlungsstelle. Dies kann mit Einschränkungen hinsichtlich der Verfügbarkeit der Teilnehmerleistungsmerkmale verbunden sein (Konzentrierende Schnittstelle ohne zwangsweise Nutzdatenwandlung).

Geben die peripheren Adaptionseinrichtungen PE im Rahmen des Verbindungsaufbaus Durchschaltebefehle in Richtung des Teilnehmeranschlusskonzentrators/ Teilnehmeranschlussnetzes aus, so werden diese in der peripheren Adaptionseinrichtung PAE auf Einstellbefehle an die teilnehmernahe Einrichtung TNE und das zwischengelagerte Media Gateway MG umgesetzt.

Werden komplexere Teilnehmerabschlussvorrichtungen (TNE-Varianten) eingesetzt, welche in Shelfs oder Schränken zusammengefasst werden müssen und eventuell gemeinsam genutzte übergeordnete teilnehmernahe Funktionseinheiten und Übertragungseinrichtungen nutzen, so kann die hierfür erforderliche Funktionalität eines Teilnehmeranschlussnetzes ebenfalls durch die peripheren Adaptionseinrichtung PAE bereitgestellt werden. Die für diese Alarmierungs- und Maintenance-Funktionen notwendigen Datenstrukturen werden in der peripheren Adaptionseinrichtung PAE gehalten und gepflegt. Die notwendige Schnittstelle zum Management-System wird separat von der des Vermittlungssystems gehalten, zur vorteilhaften Reduktion der Komplexität des Gesamtsystems, das dann sowohl Funktionen einer Ortsvermittlungsstelle bereitstellt wie auch die eines Anschlussleitungsnetzes, ohne dass es letzteres als separate Einrichtung gibt.

## Patentansprüche

1. Vorrichtung zum Anschluss von klassischen analogen und ISDN Teilnehmern an ein Vermittlungssystem, wobei die Teilnehmersignalisierung zwischen einer Teilnehmerabschlussvorrichtung (TNE) und dem Vermittlungssystem paketbasiert über ein IP-basiertes Netz übertragen wird und jeweils eine Mehrzahl derartiger Teilnehmer einer gemeinsamen Menge peripherer Einrichtungen des Vermittlungssystems zugeordnet sind,
- bei der durch die einem dieser Teilnehmer an der Teilnehmerabschlussvorrichtung (TNE) zugeordneten peripheren Einrichtungen vermittlungstechnische Ressourcen und /oder Funktionen für diesen Anschluss bereitgestellt werden und
- bei der wenigstens eine periphere Adaptionseinrichtung (PAE) vorgesehen ist, die in der Peripherie des Vermittlungssystems angeordnet ist und der Anpassung der auf der Schnittstelle zwischen Teilnehmerabschlussvorrichtung (TNE) und peripheren Adaptionseinrichtung (PAE) verwendeten Nachrichten an die Bedürfnisse der dem TNE-Port zugeordneten Menge peripherer Einrichtungen dienlich ist.

2. Vorrichtung nach Anspruch 1,
**dadurch gekennzeichnet,**
**dass** die Teilnehmerabschlussvorrichtung (TNE) und die wenigstens eine periphere Adaptionseinrichtung (PAE) eine Schnittstelle zu einem Paketnetz aufweisen und die wenigstens eine periphere Adaptionseinrichtung (PAE) den bidirektionalen Nachrichtentransfer zwischen Teilnehmerabschlussvorrichtung (TNE) und mindestens einer zugeordneten peripheren Einrichtung (PE) unterstützt.

3. Vorrichtung nach Anspruch 1, 2,
**dadurch gekennzeichnet,**
**dass** hinsichtlich des Nachrichtentransfers zwischen der Teilnehmerabschlussvorrichtung (TNE) und der wenigstens einen peripheren Adaptionseinrichtung (PAE) eine Adressumsetzung zwischen der für das TNE-Port verwendeten Adressierung im Paketnetz und der vermittlungsstelleninternen Adresse des Ports in der Menge der dem Port zugeordneten peripheren Einrichtungen erfolgt.

4. Vorrichtung nach Anspruch 1 bis 3,
**dadurch gekennzeichnet,**
**dass** in der wenigstens einen peripheren Adaptionseinrichtung (PAE) eine Protokollkonvertierung der Teilnehmersignalisierung zwischen den von der Teilnehmerabschlussvorrichtung (TNE) verwendeten Nachrichten und den in der Menge der zugeordneten peripheren Einrichtungen verwendeten Nachrichten vorgenommen wird.

5. Vorrichtung nach Anspruch 1 bis 4,
**dadurch gekennzeichnet,**
**dass** der pro Anschluss an einer Teilnehmerabschlusseinrichtung (TNE) notwendige Nachrichtentransfer zwischen der wenigstens einen peripheren Adaptionseinrichtung (PAE) und einer zugeordneten peripheren Einrichtung (PE) über das Nachrichtenverteilsystem der Vermittlungsstelle erfolgt.

6. Vorrichtung nach Anspruch 1 bis 4,
**dadurch gekennzeichnet,**
**dass** der Nachrichtentransfer zwischen der wenigstens einen peripheren Adaptionseinrichtung (PAE) und einer zugeordneten peripheren Einrichtung (PE) über feste Sprachkanaldurchhaltungen (Nailed-Up Connections) erfolgt, wobei die Verteilung der Signalisierungsnachrichten der Teilnehmerabschlussvorrichtung (TNE) auf eine Mehrzahl von derartigen festen Verbindungen mittels der Adresse der Teilnehmerabschlussvorrichtung (TNE) im Paketnetz und dem Nachrichtentyp erfolgt.

7. Vorrichtung nach einem der vorstehenden Ansprüche,
**dadurch gekennzeichnet,**
**dass** für Teilnehmeranschlüsse mit analoger Signalisierung die Leitungssignale in der Teilnehmerabschlussvorrichtung (TNE) auf vermittlungstechnische Nachrichten umgesetzt werden bzw. in der Gegenrichtung vermittlungstechnische Nachrichten in Leitungssignale umgesetzt werden.

8. Vorrichtung nach einem der vorstehenden Ansprüche,
**dadurch gekennzeichnet,**
**dass**, falls die Kommunikation zwischen einer peripheren Adaptionseinrichtung (PAE) und einer Teilnehmerabschlussvorrichtung (TNE) hergestellt ist, die Teilnehmersignalisierung transparent für ISDN Teilnehmer und Nebenstellen erfolgt.

9. Vorrichtung nach einem der vorstehenden Ansprüche,
**dadurch gekennzeichnet,**
**dass** zwischen der peripheren Adaptionseinrichtung PAE und der Teilnehmerabschlussvorrichtung (TNE) ausgetauschte Nachrichten die Paketadresse der Teilnehmerabschlussvorrichtung (TNE) enthalten ergänzt um die Kennung des betroffenen Ports bzw. eine Paketadresse, aus der der sendende oder empfangende D-Kanal bzw. der sendende oder empfangende analoge Port eindeutig hervorgeht.

10. Vorrichtung nach einem der vorstehenden Ansprüche,
**dadurch gekennzeichnet,**
**dass** die Übertragung der Teilnehmersignalisierung zwischen Teilnehmerabschlussvorrichtung (TNE) und der wenigstens einen peripheren Adaptionseinrichtung (PAE) über eines der folgenden Protokolle erfolgt:
IP/UDP für analoge und ISDN-Teilnehmer,
SCTP /IUA für ISDN-Teilnehmer,
SCTP /V5UA für analoge und ISDN-Teilnehmer,
MGCP oder H.248 für analoge Teilnehmer.

11. Vorrichtung nach einem der vorstehenden Ansprüche,
**dadurch gekennzeichnet,**
**dass** die Adressumsetzungen in der peripheren Adaptionseinrichtung (PAE) via Tabellen erfolgen, wobei die Tabelleneinträge auf Grund von administrativen Ereignissen erfolgen, die der peripheren Adaptionseinrichtung über eine vom Vermittlungssystem separate Schnittstelle zum Network Management bekannt gemacht werden.

12. Vorrichtung nach Anspruch 11,
**dadurch gekennzeichnet,**
**dass** für die separate Schnittstelle zum Network Management das SNMP Protokoll verwendet wird.

13. Vorrichtung nach einem der vorstehenden Ansprüche,
**dadurch gekennzeichnet,**
**dass** ein Paar peripherer Adaptionseinrichtungen einer Mehrzahl von Paaren von peripheren Einrichtungen zugeordnet ist, deren jedes jeweils eine Mehrzahl von Teilnehmerabschlussvorrichtungen (TNE) hinsichtlich der dort vorhandenen Anschlüsse vermittlungstechnisch bedient.

14. Vorrichtung nach einem der vorstehenden Ansprüche,
**dadurch gekennzeichnet,**
**dass** die Durchschaltung eines Nutzdatenstromes zwischen einem Anschluss an der Teilnehmerabschlussvorrichtung und einem fernen Kommunikationspartner auf Anforderung einer dem Anschluss zugeordneten peripheren Einrichtungen (PE) und unter Steuerung einer peripheren Adaptionseinrichtung (PAE) erfolgt.

15. Vorrichtung nach einem der vorstehenden Ansprüche,
**dadurch gekennzeichnet,**
**dass** der Nutzdatenstrom einer Verbindung eines Anschlusses an der Teilnehmerabschlussvorrichtung (TNE) zwangsweise über ein Media Gateway in eine der zugeordneten peripheren Einrichtungen TDM-basiert hineingeführt wird, wobei die Durchschaltung des User Kanals des Anschlusses an der Teilnehmerabschlussvorrichtung (TNE) auf einen Kanal des den zugeordneten peripheren Einrichtungen (PE) vorgelagerten Media Gateways auf Anreiz der für die Verbindung aktiven peripheren Einrichtung erfolgt und zur Ansteuerung des vorgelagerten Media Gateways und der Teilnehmerabschlussvorrichtung durch die periphere Adaptionseinrichtung im Falle der Allokierung und der De-Allokierung der Durchschaltung des Nutzdatenstromes führt.

16. Vorrichtung nach Anspruch 15,
**dadurch gekennzeichnet,**
**dass** zur Durchschaltung des Nutzdatenstromes im vorgelagerten Media Gateway und in der Teilnehmerabschlussvorrichtung das MGCP Protokoll oder H.248 verwendet wird.

17. Vorrichtung nach einem der vorstehenden Ansprüche,
**dadurch gekennzeichnet,**
**dass** der Nutzdatenstrom einer Verbindung eines Anschlusses an der Teilnehmerabschlussvorrichtung (TNE) nicht zwangsweise über ein Media Gateway in eine der zugeordneten peripheren Einrichtungen TDM-basiert hineingeführt wird, sondern ein direkter paketbasierter Nutzdatenstrom mit dem fernen Partner unterstützt wird, wobei die Durchschaltung des User Kanals des Anschlusses an der Teilnehmerabschlussvorrichtung (TNE) auf einen Kanal des fernen Partners paketbasiert unter Austausch der Paketadressen der beiden Partner und auf Anreiz der für die Verbindung aktiven peripheren Einrichtung erfolgt, und zur Ansteuerung der Teilnehmerabschlussvorrichtung durch die periphere Adaptionseinrichtung im Falle der Durchschaltung des Nutzdatenstroms und dem Auslösen des Nutzdatenstroms führt.

18. Vorrichtung nach Anspruch 17,
**dadurch gekennzeichnet,**
**dass** zur Durchschaltung des Nutzdatenstromes in der Teilnehmerabschlussvorrichtung das MGCP Protokoll oder H.248 verwendet wird.

19. Vorrichtung nach Anspruch 17,
**dadurch gekennzeichnet,**
**dass** der ferne Partner ebenfalls ein Teilnehmer an einer Teilnehmerabschlusseinrichtung ist, ein über eine Media Gateway erreichbarer Teilnehmer oder ein IP-basierter Teilnehmer (H.323, SIP) des Paketnetzes.

20. Vorrichtung nach einem der vorstehenden Ansprüche,
**dadurch gekennzeichnet,**
**dass** die peripheren Einrichtungen die vermittlungstechnische Funktionalität einer V5.2-Schnittstelle bereitstellen, indem sie V5.2 definierte Nachrichten des PSTN, des ISDN, des Port Control und des Bearer Channel Connection Protokolls bereitstellen, dass die Signalisierung anstatt über physikalische Communication Channels der V5.2 jedoch über eine periphere Adaptionseinrichtung geführt wird, die eine protokollmäßige und adreßmäßige Umsetzung auf die Bedürfnisse der Ansteuerung der Teilnehmerabschlussvorrichtungen vornimmt.

21. Vorrichtung nach Anspruch 20,
**dadurch gekennzeichnet,**
**dass** die Teilnehmer an der Teilnehmerabschlussvorrichtung als V5.2 Teilnehmer im Vermittlungssystem eingerichtet sind, wobei die V5.2 spezifischen Parameter der Zuordnung einer V5.2-Adresse und der logischen V5.2 Kommunikationskanäle nicht als Bedienereingabe erforderlich sind.

## Claims

1. Device for connecting traditional analog and ISDN subscribers to a switching system, the subscriber signaling being transmitted in a packet-based manner via an IP-based network between a subscriber termination device (TNE) and the switching system and in each case a plurality of such subscribers being allocated to a common set of peripheral devices of the switching system,
- wherein switching resources and/or functions for this connecting are provided by the peripheral devices allocated to one of these subscribers at the subscriber termination device (TNE), and
- wherein at least one peripheral adaptation device (PAE) is provided which is arranged in the periphery of the switching system and is used for adapting the messages, used on the interface between subscriber termination device (TNE) and peripheral adaptation device (PAE), to the needs of the set of peripheral devices allocated to the TNE port.

2. Device according to Claim 1, **characterized in that**, the subscriber termination device (TNE) and the at least one peripheral adaptation device (PAE) have an interface to a packet network and the at least one peripheral adaptation device (PAE) supports the bidirectional message transfer between subscriber termination device (TNE) and at least one associated peripheral device (PE).

3. Device according to Claim 1, 2, **characterized in that**, with regard to the message transfer between the subscriber termination device (TNE) and the at least one peripheral adaptation device (PAE), an address translation takes place between the addressing used for the TNE port in the packet network and the exchange-internal address of the port in the set of peripheral devices allocated to the port.

4. Device according to Claim 1 to 3, **characterized in that**, in the at least one peripheral adaptation device (PAE), the protocol of the subscriber signaling is converted between the messages used by the subscriber termination device (TNE) and the messages used in the set of associated peripheral devices.

5. Device according to Claim 1 to 4, **characterized in that** the message transfer, which is necessary for each line at a subscriber termination device (TNE), between the at least one peripheral adaptation device (PAE) and an associated peripheral device (PE) takes place via the message distribution system of the exchange.

6. Device according to Claim 1 to 4, **characterized in that** the message transfer between the at least one peripheral adaptation device (PAE) and an associated peripheral device (PE) takes place via nailed-up connections, the signaling messages of the subscriber termination device (TNE) being distributed to a plurality of such nailed-up connections by means of the address of the subscriber termination device (TNE) in the packet network and the type of message.

7. Device according to one of the preceding claims, **characterized in that**, for subscriber lines with analog signaling, the line signals are converted to switching messages in the subscriber termination device (TNE) or, respectively, switching messages are converted into line signals in the opposite direction.

8. Device according to one of the preceding claims, **characterized in that**, if communication has been established between a peripheral adaptation device (PAE) and a subscriber termination device (TNE), the subscriber signaling is transparent for ISDN subscribers and branch exchanges.

9. Device according to one of the preceding claims, **characterized in that** messages exchanged between the peripheral adaptation device PAE and the subscriber termination device (TNE) contain the packet address of the subscriber termination device (TNE) supplemented by the identification of the relevant port or, respectively, a packet address which unambiguously indicates the transmitting or receiving D channel or, respectively, the transmitting or receiving analog port.

10. Device according to one of the preceding claims, **characterized in that** the subscriber signaling is transmitted between the subscriber termination device (TNE) and the at least one peripheral adaptation device (PAE) via one of the following protocols:
IP/UDP for analog and ISDN subscribers,
SCTP/IUA for ISDN subscribers,
SCTP/V5UA for analog and ISDN subscribers,
MGCP or H.248 for analog subscribers.

11. Device according to one of the preceding claims, **characterized in that** the address translations in the peripheral adaptation device (PAE) take place via tables, the table entries being made on the basis of administrative events which are reported to the peripheral adaptation device via an interface to the network management which interface is separate from the switching system.

12. Device according to Claim 11, **characterized in that** the SNMP protocol is used for the separate interface to the network management.

13. Device according to one of the preceding claims, **characterized in that** a pair of peripheral adaptation devices is allocated to a plurality of pairs of peripheral devices, each one of which in each case serves with respect to call processing a plurality of subscriber termination devices (TNE) with regard to the lines present there.

14. Device according to one of the preceding claims, **characterized in that** a user data stream is switched through between a line at the subscriber termination device and a distant communication partner at the request of one of the peripheral devices (PE) allocated to the line and under the control of a peripheral adaptation device (PAE).

15. Device according to one of the preceding claims, **characterized in that** the user data stream of a connection of a line at the subscriber termination device (TNE) is mandatorily brought via a media gateway in a TDM-based manner into one of the associated peripheral devices, the switching-through of the user channel of the line at the subscriber termination device (TNE) to a channel of the media gateway preceding the associated peripheral devices (PE) taking place following a stimulation by the peripheral device active for the connection and leading to the control of the preceding media gateway and the subscriber termination device by the peripheral adaptation device in the case of the allocation and deallocation of the switching-through of the user data stream.

16. Device according to Claim 15, **characterized in that** the MGCP protocol or H.248 is used for switching through the user data stream in the preceding media gateway and in the subscriber termination device.

17. Device according to one of the preceding claims, **characterized in that** the user data stream of a connection of a line at the subscriber termination device (TNE) is not mandatorily brought into one of the associated peripheral devices in a TDM-based manner via a media gateway but a direct packet-based user data stream with the distant partner is supported, the switching-through of the user channel of the line at the subscriber termination device (TNE) to a channel of the distant partner taking place in a packet-based manner with an exchange of the packet addresses of the two partners and following a stimulation by the peripheral device active for the connection, and leading to the control of the subscriber termination device by the peripheral adaptation device in the case of the switching-through of the user data stream and the release of the user data stream.

18. Device according to Claim 17, **characterized in that** the MGCP protocol or H.248 is used for switching through the user data stream in the subscriber termination device.

19. Device according to Claim 17, **characterized in that** the distant partner is also a subscriber at a subscriber termination device, a subscriber which can be reached via a media gateway or an IP-based subscriber (H.323, SIP) of the packet network.

20. Device according to one of the preceding claims, **characterized in that** the peripheral devices provide the switching functionality of a V5.2 interface by providing V5.2-defined messages of the PSTN, of the ISDN, of the port control and of the bearer channel connection protocol, **in that** the signaling is conducted, instead of via physical communication channels of the V5.2, via a peripheral adaptation device which performs a protocol and address conversion to the requirements of the control of the subscriber termination devices.

21. Device according to Claim 20, **characterized in that** the subscribers at the subscriber termination device are set up as V5.2 subscribers in the switching system, the V5.2-specific parameters of the allocation of a V5.2 address and of the logical V5.2 communication channels not being required as operator input.

## Revendications

1. Dispositif pour le raccordement d'abonnés analogiques classiques et ISDN à un système de commutation, la signalisation d'abonné entre un dispositif de terminaison d'abonné (TNE) et le système de commutation étant transmise en mode paquets via un réseau basé sur IP et respectivement une pluralité de tels abonnés étant affectés à un ensemble commun
de dispositifs périphériques du système de commutation, dans lequel :
- les dispositifs périphériques associés à l'un de ces abonnés au niveau du dispositif de terminaison d'abonné (TNE) fournissent des ressources techniques de commutation et/ou des fonctions pour ce raccordement ; et
- au moins un dispositif d'adaptation périphérique (PAE) est prévu, lequel est situé dans la périphérie du système de commutation et sert à l'adaptation des messages utilisés sur l'interface entre le dispositif de terminaison d'abonné (TNE) et le dispositif d'adaptation périphérique (PAE) aux besoins de l'ensemble de dispositifs périphériques associé au port TNE.

2. Dispositif selon la revendication 1,
**caractérisé en ce que**
le dispositif de terminaison d'abonné (TNE) et l'au moins un dispositif d'adaptation périphérique (PAE) présentent une interface vers un réseau de paquets et l'au moins un dispositif d'adaptation périphérique (PAE) supporte le transfert de messages bidirectionnel entre le dispositif de terminaison d'abonné (TNE) et l'au moins un dispositif périphérique (PE) associé.

3. Dispositif selon la revendication 1, 2,
**caractérisé en ce que**,
pour le transfert de messages entre le dispositif de terminaison d'abonné (TNE) et l'au moins un dispositif d'adaptation périphérique (PAE), il se produit une conversion d'adresse entre l'adressage utilisé pour le port TNE dans le réseau de paquets et l'adresse du port interne au centre de commutation dans l'ensemble des dispositifs périphériques associés au port.

4. Dispositif selon la revendication 1 à 3,
**caractérisé en ce que**
est effectuée, dans l'au moins un dispositif d'adaptation périphérique (PAE), une conversion de protocole de la signalisation d'abonné entre les messages utilisés par le dispositif de terminaison d'abonné (TNE) et les messages utilisés dans l'ensemble des dispositifs périphériques associés.

5. Dispositif selon la revendication 1 à 4,
**caractérisé en ce que**
le transfert de messages, nécessaire pour chaque raccordement à un dispositif de terminaison d'abonné (TNE), entre l'au moins un dispositif d'adaptation périphérique (PAE) et un dispositif périphérique associé (PE) s'effectue par l'intermédiaire du système de distribution de messages du centre de commutation.

6. Dispositif selon la revendication 1 à 4,
**caractérisé en ce que**
le transfert de messages entre l'au moins un dispositif d'adaptation périphérique (PAE) et un dispositif périphérique associé (PE) s'effectue par l'intermédiaire d'interconnexions fixes de canaux vocaux (Nailed-Up Connections), la distribution des messages de signalisation du dispositif de terminaison d'abonné (TNE) sur une pluralité de telles liaisons fixes s'effectuant au moyen de l'adresse du dispositif de terminaison d'abonné (TNE) dans le réseau de paquets et du type de message.

7. Dispositif selon l'une des revendications précédentes,
**caractérisé en ce que**,
dans le cas de raccordements d'abonnés avec signalisation analogique, les signaux de lignes, dans le dispositif de terminaison d'abonné (TNE), sont convertis en messages techniques de commutation resp. des messages techniques de commutation sont, dans le sens inverse, convertis en signaux de lignes.

8. Dispositif selon l'une des revendications précédentes,
**caractérisé en ce que**,
si la communication entre un dispositif d'adaptation périphérique (PAE) et un dispositif de terminaison d'abonné (TNE) est établie, la signalisation d'abonné s'effectue de manière transparente pour les abonnés ISDN et les postes secondaires.

9. Dispositif selon l'une des revendications précédentes,
**caractérisé en ce que**
des messages échangés entre le dispositif d'adaptation périphérique (PAE) et le dispositif de terminaison d'abonné (TNE) contiennent l'adresse des paquets du dispositif de terminaison d'abonné (TNE) complétée de l'identifiant du port concerné resp. une adresse de paquets dont ressort clairement le canal D émetteur ou récepteur resp. le port analogique émetteur ou récepteur.

10. Dispositif selon l'une des revendications précédentes,
**caractérisé en ce que**
la transmission de la signalisation d'abonné entre le dispositif de terminaison d'abonné (TNE) et l'au moins un dispositif d'adaptation périphérique (PAE) s'effectue via l'un des protocoles suivante
IP/UDP pour les abonnés analogiques et ISDN ;
SCTP /IUA pour les abonnés ISDN ;
SCTP /V5UA pour les abonnés analogiques et ISDN ;
MGCP ou H.248 pour les abonnés analogiques.

11. Dispositif selon l'une des revendications précédentes,
**caractérisé en ce que**
les conversions d'adresses dans le dispositif d'adaptation périphérique (PAE) s'effectuent via des tables, les entrées des tables étant effectuées sur la base d'événements administratifs qui sont portés à la connaissance du dispositif d'adaptation périphérique par l'intermédiaire d'une interface, séparée du système de commutation, vers l'administration de réseau.

12. Dispositif selon la revendication 11,
**caractérisé en ce que**
le protocole SNMP est utilisé pour l'interface séparée vers l'administration de réseau.

13. Dispositif selon l'une des revendications précédentes,
**caractérisé en ce que**
une paire de dispositifs d'adaptation périphériques est associée à une pluralité de paires de dispositifs périphériques dont chacune dessert, en termes de technique de commutation, respectivement une pluralité de dispositifs de terminaison d'abonné (TNE) par rapport aux raccordements qui y sont présents.

14. Dispositif selon l'une des revendications précédentes,
**caractérisé en ce que**
l'interconnexion d'un flux de données utiles entre un raccordement au dispositif de terminaison d'abonné et un partenaire de communication distant s'effectue à la demande d'un dispositif périphérique (PE) associé au raccordement et sous la commande d'un dispositif d'adaptation périphérique (PAE).

15. Dispositif selon l'une des revendications précédentes,
**caractérisé en ce que**
le flux de données utiles d'une liaison d'un raccordement au dispositif de terminaison d'abonné (TNE) est introduit de force, sur la base du TDM et via une passerelle média, dans l'un des dispositifs périphériques associés, la l'interconnexion du canal d'utilisateur du raccordement au dispositif de terminaison d'abonné (TNE) à un canal de la passerelle média située en amont des dispositifs périphériques associés (PE) s'effectuant suite à la stimulation du dispositif périphérique actif pour la liaison et entraînant l'amorçage de la passerelle média située en amont et du dispositif de terminaison d'abonné par le dispositif d'adaptation périphérique dans le cas de l'allocation et de la désallocation de l'interconnexion du flux de données utiles.

16. Dispositif selon la revendication 15,
**caractérisé en ce que**
le protocole MGCP ou H.248 est utilisé pour l'interconnexion du flux de données utiles dans la passerelle média située en amont et dans le dispositif de terminaison d'abonné.

17. Dispositif selon l'une des revendications précédentes,
**caractérisé en ce que**
le flux de données utiles d'une liaison d'un raccordement au dispositif de terminaison d'abonné (TNE) n'est pas introduit de force, sur la base du TDM et via une passerelle média, dans l'un des dispositifs périphériques associés, mais un flux de données utiles direct basé sur des paquets avec un partenaire distant est supporté, la l'interconnexion du canal d'utilisateur du raccordement au dispositif de terminaison d'abonné (TNE) à un canal du partenaire distant s'effectuant de manière basée sur des paquets avec échange des adresses des paquets des deux partenaires et suite à la stimulation du dispositif périphérique actif pour la liaison et entraînant l'amorçage du dispositif de terminaison d'abonné par le dispositif d'adaptation périphérique dans le cas de l'interconnexion du flux de données utiles et le déclenchement du flux de données utiles.

18. Dispositif selon la revendication 17,
**caractérisé en ce que**
le protocole MGCP ou H.248 est utilisé pour l'interconnexion du flux de données utiles dans le dispositif de terminaison d'abonné.

19. Dispositif selon la revendication 17,
**caractérisé en ce que**
le partenaire distant est également un abonné au niveau d'un dispositif de terminaison d'abonné, un abonné joignable via une passerelle média ou un abonné basé sur IP (H.323, SIP) du réseau de paquets.

20. Dispositif selon l'une des revendications précédentes,
**caractérisé en ce que**
les dispositifs périphériques fournissent la fonctionnalité technique de commutation d'une interface V5.2 en fournissant des messages, définis V5.2, du PSTN, de l'ISDN, du Port Control et du protocole « Bearer Channel Connection » ;
la signalisation passe non pas par des canaux de communication physique de V5.2, mais par un dispositif d'adaptation périphérique qui effectue une conversion, en ce qui concerne le protocole et l'adresse, pour les besoins de l'amorçage des dispositifs de terminaison d'abonné.

21. Dispositif selon la revendication 20,
**caractérisé en ce que**
les abonnés au niveau du dispositif de terminaison d'abonné sont installés sous la forme d'abonnés V5. 2 dans le système de commutation, les paramètres, spécifiques à V5.2, de l'attribution d'une adresse V5.2 et des canaux de communication logiques V5.2 n'étant pas requis en tant que saisie de l'opérateur.
